# EUROPEAN PATENT SPECIFICATION

(11) **EP 4 253 108 B1**
(45) Date of publication and mention of the grant of the patent: **16.07.2025**
(21) Application number: 23164461.8
(22) Date of filing: 27.03.2023
(51) Int. Cl.: B60H 1/00, B60H 1/32

(54) **AUTONOMOUS SELECTION AND IDENTIFICATION OF TRIPS AND TRANSPORT REFRIGERATION UNIT OPERATING BEHAVIOR**
AUTONOME AUSWAHL UND IDENTIFIZIERUNG VON REISEN UND BETRIEBSVERHALTEN EINER TRANSPORTKÜHLEINHEIT
SÉLECTION ET IDENTIFICATION AUTONOMES DE TRAJETS ET DE COMPORTEMENT DE FONCTIONNEMENT D'UNITÉ DE RÉFRIGÉRATION DE TRANSPORT

(30) Priority: 31.03.2022 US 202263325881 P
(43) Date of publication of application: 04.10.2023
(73) Proprietor: Carrier Corporation, Palm Beach Gardens, FL 33418 (US)
(72) Inventor: FOLLANSBEE, David, Syracuse, NY 13221 (US)
(74) Representative: Dehns

(56) References cited:
- EP-A1- 3 628 519
- US-A1- 2020 207 326
- US-B2- 11 155 143

## Description

The invention relates to refrigeration control systems, and more specifically, to proactive adjustment of transport refrigeration unit (TRU) settings to optimize system performance and efficiency.

Refrigerated vehicles and trailers are commonly used to transport perishable goods. A transport refrigeration unit is commonly mounted to the vehicles or to the trailer in operative association with a cargo space defined within the vehicles or trailer for maintaining a controlled temperature environment within the cargo space. Document US 2020/207326 A1 discloses a transport refrigeration unit and a power supply controlled according to the vehicle route condition data.

According to a first aspect of the invention, a method of operating a transport refrigeration system is provided as recited in claim 1.

Optionally, the operation is automatically adjusted based on the recommended adjustment command by at least one of a controller of the transport refrigeration unit or a power management module of the power supply system.

Optionally, the method may include transmitting the recommended adjustment command to a computing device of an individual, wherein the individual can accept a recommended adjustment via the computing device, the operation adjusted in response to the recommended adjustment being accepted.

Optionally, the method may include increasing or decreasing cooling provided by the transport refrigeration unit based on the recommended adjustment command.

Optionally, the method may include increasing or decreasing heating provided by the transport refrigeration unit based on the recommended adjustment command.

Optionally, the method may include increasing or decreasing power draw from the power supply system based on the recommended adjustment command.

According to a second aspect of the invention, a transport refrigeration system is provided as recited in claim 7.

Optionally, the operation is automatically adjusted based on the recommended adjustment command by at least one of a controller of the transport refrigeration unit or a power management module of the power supply system.

Optionally, the recommended adjustment command is transmitted to a computing device of an individual, wherein the individual can accept a recommended adjustment via the computing device, the operation adjusted in response to the recommended adjustment being accepted.

Optionally, the transport refrigeration unit is configured to increase cooling or decrease based on the recommended adjustment command.

Optionally, the transport refrigeration unit is configured to increase heating or decrease based on the recommended adjustment command.

Optionally, a power management module is configured to increase power draw or decrease power draw from the power supply system based on the recommended adjustment command.

According to a third aspect of the invention, a computer program product tangibly embodied on a non-transitory computer readable medium is provided as recited in claim 13.

The method of the first aspect of the invention may comprise providing the system of the second aspect of the invention, and/or the computer program product of the third aspect of the invention. The method may comprise using and/or providing any features of the invention as described herein with reference to the second and third aspects of the invention. The system of the second aspect of the invention may be configured to perform the method of the first aspect of the invention, and may use or perform any of the features of the second aspect of the invention. The computer program product of the third aspect of the invention may be configured to provide the method of the first aspect of the invention, and/or any features thereof. It should be understood that features described herein with respect to one aspect of the invention may form part of any of the other aspects of the invention.

Technical effects of embodiments of the present invention include determining a current route of a transport refrigeration unit by comparing location data to prior route location data and then adjusting operation of a transport refrigeration unit and/or a power supply of the transport refrigeration unit based on the operational information from those prior route.

The foregoing features and elements as well as the operation thereof will become more apparent in light of the following description and the accompanying drawings, which are provided by way of example only. It should be understood, however, that the following description and drawings are intended to be illustrative and explanatory in nature and non-limiting.

The following descriptions should not be considered limiting in any way. With reference to the accompanying drawings, like elements are numbered alike:
FIG. 1 is a schematic illustration of a transport refrigeration system;
FIG. 2 is an enlarged schematic illustration of a transport refrigeration unit of the transport refrigeration system of FIG. 1; and
FIG. 3 is a flow process illustrating a method of operating the transport refrigeration system of FIGS. 1 and 2.

A detailed description of one or more embodiments of the disclosed apparatus and method are presented herein by way of exemplification and not limitation with reference to the Figures.

Embodiments disclosed herein seek to determine what route a transport refrigeration unit is on and preemptively adjusting operation of a transport refrigeration unit and/or a power supply for the transport refrigeration unit to account for future conditions experienced along a route.

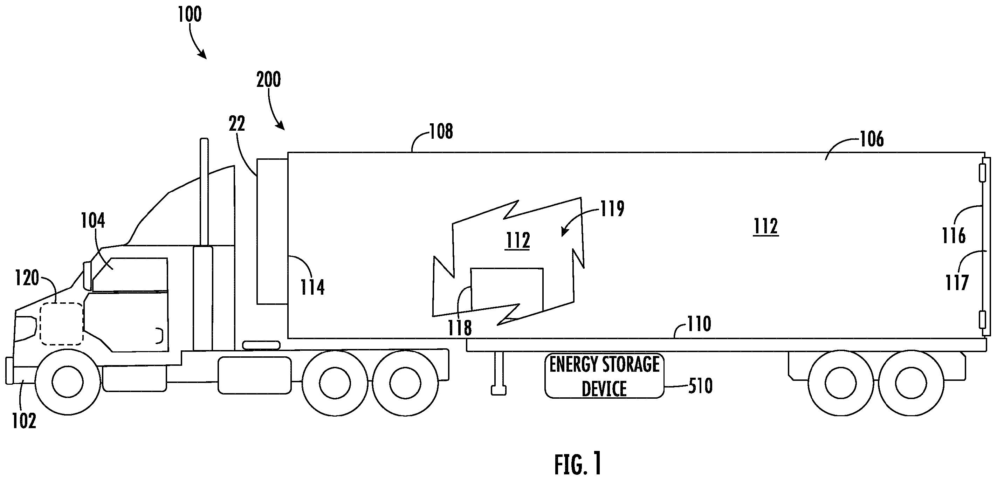

Referring now to FIG. 1, a schematic view of a transport refrigeration system 200 is illustrated, according to an embodiment of the present invention. The transport refrigeration system 200 is being illustrated as a trailer system 100, as seen in FIG. 1. The trailer system 100 includes a vehicle 102 integrally connected to a transport container 106. The vehicle 102 includes an operator's compartment or cab 104 and a propulsion motor 120 which acts as the drive system of the trailer system 100. The propulsion motor 120 is configured to power the vehicle 102. The energy source that powers the propulsion motor 120 may be at least one of compressed natural gas, liquefied natural gas, gasoline, electricity, diesel, hydrogen, electricity from a fuel cell, a electricity from a hydrogen fueled proton exchange membrane (PEM) fuel cell, electricity from a battery, electricity from a generator, or any combination thereof. The propulsion motor 120 may be an electric motor or a hybrid motor (e.g., a combustion engine and an electric motor). The transport container 106 is coupled to the vehicle 102. The transport container 106 may be removably coupled to the vehicle 102. The transport container 106 is a refrigerated trailer and includes a top wall 108, a directly opposed bottom wall 110, opposed side walls 112, and a front wall 114, with the front wall 114 being closest to the vehicle 102. The transport container 106 further includes a door or doors 117 at a rear wall 116, opposite the front wall 114. The walls of the transport container 106 define a refrigerated cargo space 119. It is appreciated by those of skill in the art that embodiments described herein may be applied to a tractor-trailer refrigerated system or non-trailer refrigeration such as, for example a rigid truck, a truck having refrigerated compartment.

Typically, transport refrigeration systems 200 are used to transport and distribute perishable goods and environmentally sensitive goods (herein referred to as perishable goods 118). The perishable goods 118 may include but are not limited to fruits, vegetables, grains, beans, nuts, eggs, dairy, seed, flowers, meat, poultry, fish, ice, blood, pharmaceuticals, or any other suitable cargo requiring temperature controlled transport. The transport refrigeration unit 22 is in operative association with the refrigerated cargo space 119 and is configured to provide conditioned air to the transport container 106.

The transport refrigeration unit 22 may be powered by an energy storage device 510. The energy storage device 510 may be attached to the trailer system 100. The energy storage device 510 may be attached to a bottom of the trailer system 100.

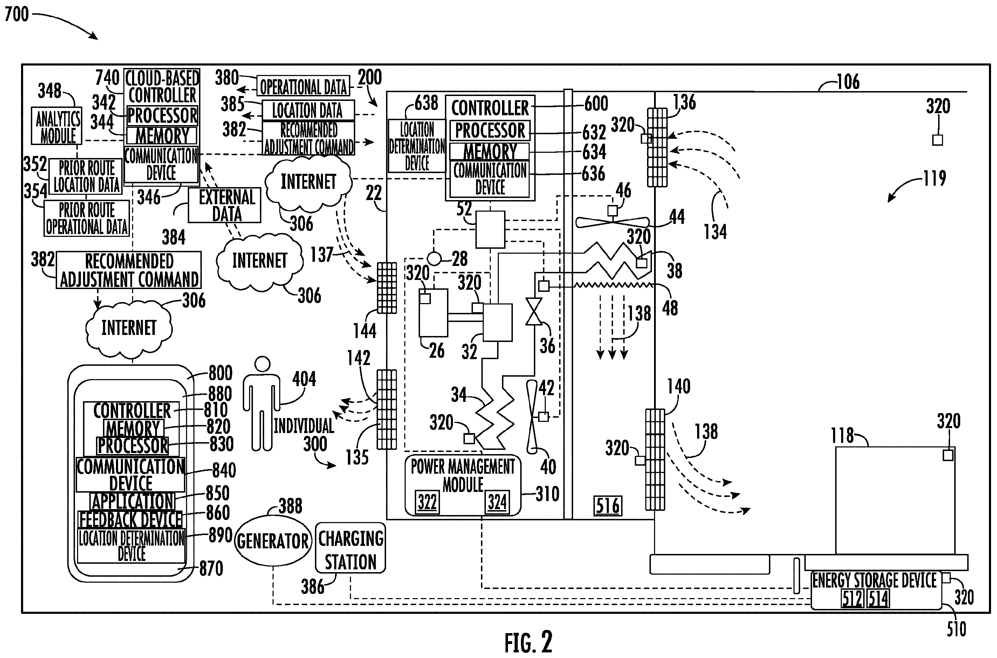

Referring now to FIG. 2, with continued reference to FIG. 1, an enlarged schematic view of the transport refrigeration system 200 is illustrated, according to an embodiment of the present invention. The transport refrigeration system 200 includes a transport refrigeration unit 22, a refrigerant compression device 32, an electric motor 26 for driving the refrigerant compression device 32, a controller 600, a refrigerant heat rejection heat exchanger 34, an expansion device 36, and a refrigerant heat absorption heat exchanger 38 connected in refrigerant flow communication in a closed loop refrigerant circuit and arranged in a conventional refrigeration cycle. The transport refrigeration unit 22 functions, under the control of the controller 600, to establish and regulate a desired environmental parameters, such as, for example temperature, pressure, humidity, carbon dioxide, ethylene, ozone, light exposure, vibration exposure, and other conditions in the refrigerated cargo space 119, as known to one of ordinary skill in the art. In an embodiment, the transport refrigeration unit 22 is capable of providing a desired temperature and humidity range.

The transport refrigeration unit 22 also includes one or more fans 40 associated with the refrigerant heat rejection heat exchanger 34 and driven by fan motor(s) 42 and one or more fans 44 associated with the refrigerant heat absorption heat exchanger 38 and driven by fan motor(s) 46. The transport refrigeration unit 22 may also include a heater 48 associated with the refrigerant heat absorption heat exchanger 38. In an embodiment, the heater 48 may be an electric resistance heater. It is to be understood that other components (not shown) may be incorporated into the refrigerant circuit as desired, including for example, but not limited to, a suction modulation valve, a receiver, a filter/dryer, an economizer circuit.

The refrigerant heat rejection heat exchanger 34 may, for example, comprise one or more refrigerant conveying coiled tubes or one or more tube banks formed of a plurality of refrigerant conveying tubes across flow path to the heat outlet 142. The fan(s) 40 are operative to pass air, typically ambient air, across the tubes of the refrigerant heat rejection heat exchanger 34 to cool refrigerant vapor passing through the tubes. The refrigerant heat rejection heat exchanger 34 may operate either as a refrigerant condenser, such as if the transport refrigeration unit 22 is operating in a subcritical refrigerant cycle or as a refrigerant gas cooler, such as if the transport refrigeration unit 22 is operating in a transcritical cycle.

The refrigerant heat absorption heat exchanger 38 may, for example, also comprise one or more refrigerant conveying coiled tubes or one or more tube banks formed of a plurality of refrigerant conveying tubes extending across flow path from a return air intake 136. The fan(s) 44 are operative to pass air drawn from the refrigerated cargo space 119 across the tubes of the refrigerant heat absorption heat exchanger 38 to heat and evaporate refrigerant liquid passing through the tubes and cool the air. The air cooled in traversing the refrigerant heat absorption heat exchanger 38 is supplied back to the refrigerated cargo space 119 through a refrigeration unit outlet 140. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

Airflow is circulated into and through the refrigerated cargo space 119 of the transport container 106 by means of the transport refrigeration unit 22. A return air 134 flows into the transport refrigeration unit 22 from the refrigerated cargo space 119 through the transport refrigeration unit return air intake 136, and across the refrigerant heat absorption heat exchanger 38 via the fan 44, thus conditioning the return air 134 to a selected or predetermined temperature. The return air 134, now referred to as conditioned air 138, is supplied into the refrigerated cargo space 119 of the transport container 106 through the transport refrigeration unit outlet 140. Heat 135 is removed from the refrigerant heat rejection heat exchanger 34 through the heat outlet 142. The transport refrigeration unit 22 may contain an external air inlet 144, as shown in FIG. 2, to aid in the removal of heat 135 from the refrigerant heat rejection heat exchanger 34 by pulling in external air 137. The conditioned air 138 may cool the perishable goods 118 in the refrigerated cargo space 119 of the transport container 106. It is to be appreciated that the transport refrigeration unit 22 can further be operated in reverse to warm the transport container 106 when, for example, the outside temperature is very low. In the illustrated embodiment, the return air intake 136, the transport refrigeration unit outlet 140, the heat outlet 142, and the external air inlet 144 are configured as grilles to help prevent foreign objects from entering the transport refrigeration unit 22.

The transport refrigeration system 200 also includes a controller 600 configured for controlling the operation of the transport refrigeration system 200 including, but not limited to, the operation of various components of the refrigerant unit 22 to provide and maintain a desired thermal environment within the refrigerated cargo space 119. The controller 600 may also be able to selectively operate the electric motor 26. The controller 600 may be an electronic controller including a processor 632 and an associated memory 634 comprising computer-executable instructions that, when executed by the processor 632, cause the processor 632 to perform various operations. The processor 632 may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 634 may be a storage device such as, for example, a random access memory (RAM), read only memory (ROM), or other electronic, optical, magnetic or any other computer readable medium.

It is understood that while transport refrigeration unit 22 is described and illustrated herein as being powered by the energy storage device 510, it is understood that the transport refrigeration unit 22 may be powered by any power source known to one of skill in the art. The transport refrigeration unit 22 may be powered by the energy storage device 510, a power generation device, a power storage device, and/or any other power source known to one of skill in the art. Other power sources may include combustion engines, fuel cells, solar cells, hybrid engines, or any other power source known to one of skill in the art.

In one embodiment, the energy storage device 510 may be located outside of the transport refrigeration unit 22. In another embodiment, the energy storage device 510 may be located within the transport refrigeration unit 22.

The energy storage device 510 may include a battery system 512, a capacitor 514, and/or any other electricity storage system known to one of skill in the art. The battery system 512 may comprise, chemical batteries, lithium-ion batteries, solid state batteries, flow batteries, or any other type of battery known to one of skill in the art. The battery system 512 may employ multiple batteries organized into battery banks. The capacitor 514 may be an electrolytic capacitor, a mica capacitor, a paper capacitor a film capacitor, a non-polarized capacitor, a ceramic capacitor, or any type of capacitor known to one of skill in the art.

The energy storage device 510 may be charged by a stationary charging station 386 such as, for example a three-phase 460Vac (60Hz) or 400Vac (50Hz) power outlet. The charging station 386 may provide single phase (e.g., level 2 charging capability) or three phase AC power to the energy storage device 510. It is understood that the charging station 386 may have any phase charging and embodiments disclosed herein are not limited to single phase or three phase AC power. In an embodiment, the charging station may be a high voltage DC power, such as, for example, 500VDC. One function of the charging station 386 is to balance the cell voltage of individual cells of the battery system at some regular cadence.

A thermal storage system 516 may be present to sink electrical energy into in order to cool the transport container 106. The thermal storage system 516 may utilize a phase change material, heat transfer fluids, or thermochemical reactions to provide cooling to the transport container 106. For example, the thermal storage system 516 may utilize electricity to change the phase change material from one phase to another phase to cool the transport container 106. The thermal storage system 516 may be an ice generation system to create ice to cool the transport container 106. The thermal storage system 516 may be an ice generation system to create ice to cool the transport container 106. The ice generation system may generate ice when electricity is available or plentiful to provide lasting cooling for the transport container 106 to conserve electricity later by reducing use of the compression device 32 for cooling.

The transport refrigeration unit 22 has a plurality of electrical power demand loads on the energy storage device 510, including, but not limited to, the electric motor 26 for the compression device 32, the fan motor 42 for the fan 40 associated with the refrigerant heat rejection heat exchanger 34, and the fan motor 46 for the fan 44 associated with the refrigerant heat absorption heat exchanger 38. As each of the fan motors 42, 46 and the electric motor 26 may be an AC motor or a DC motor, it is to be understood that various power converters 52, such as AC to DC rectifiers, DC to AC inverters, AC to AC voltage/frequency converters, and DC to DC voltage converters, may be employed in connection with or without the energy storage device 510 as appropriate. In the depicted embodiment, the heater 48 also constitutes an electrical power demand load. The electric resistance heater 48 may be selectively operated by the controller 600 whenever a control temperature within the temperature controlled cargo box drops below a preset lower temperature limit, which may occur in a cold ambient environment. In such an event the controller 600 would activate the heater 48 to heat air circulated over the heater 48 by the fan(s) 44 associated with the refrigerant heat absorption heat exchanger 38. The heater 48 may also be used to de-ice the return air intake 136. Additionally, the electric motor 26 being used to power the refrigerant compression device 32 constitutes a demand load. The refrigerant compression device 32 may comprise a single-stage or multiple-stage compressor such as, for example, a reciprocating compressor or a scroll compressor. The transport refrigeration system 200 may also include a voltage sensor 28 to sense the voltage coming into the transport refrigeration unit 22.

The power demand loads of the transport refrigeration unit 22 may be managed and fulfilled by a power supply system 300. The power supply system 300 may be configured to provide electricity to power the transport refrigeration system 200. The power supply system 300 may store and/or generate electricity. The power supply system 300 may include the energy storage device 510 and the power management module 310.

The power supply system 300 may also include a generator 388 (e.g., a hub generator, an axle generator), a fuel cell, a solar panel, a battery system, the propulsion motor 120 of the vehicle 102, or any other power supply system known to one of skill in the art. The generator 388 may be a hub generator or a wheel generator operably connect to a wheel or axle of the transport container 106 that is configured to generator electricity during the slowing of the vehicle 102 or the downward descent of the vehicle 102. The generator 388 may serve as part of the power supply system 300 and assist in generating supplemental electricity for the power supply system 300 as required.

The power management module 310 may be an electronic controller including a processor 324 and an associated memory 322 comprising computer-executable instructions (i.e., computer program product) that, when executed by the processor 324, cause the processor 324 to perform various operations. The processor 324 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 322 may be but is not limited to a random access memory (RAM), read only memory (ROM), or other electronic, optical, magnetic or any other computer readable medium. While the power management module 310 is being illustrated and described herein as a separate electronic controller the embodiments described herein are applicable to the power management module 310 being incorporated as software within the controller 600 of the transport refrigeration unit 22.

FIG. 2 also illustrates a transportation refrigeration unit performance adjustment system 700, according to an embodiment of the present invention. It should be appreciated that, although particular systems are separately defined in the schematic block diagrams, each or any of the systems may be otherwise combined or separated via hardware and/or software.

The transportation refrigeration unit performance adjustment system 700, as illustrated, may include the cloud-based controller 740, the controller 600 of the transport refrigeration unit 22, one or more sensors 320, a location determination device 638, and a computer application 850 installed or accessible on a computing device 800. The one or more sensors 320 that may be distributed throughout the transport refrigeration unit 22 and the refrigerated cargo space 119. For example, the sensors 320 may be located on in the transport container 106, proximate or on the perishable goods 118, proximate or on the return air intake 136, proximate or on the refrigeration unit outlet 140, proximate or on the refrigerant heat absorption heat exchanger 38, proximate or on the refrigerant heat rejection heat exchanger 34, proximate or on the refrigerant compression device 32, proximate or on the electric motor 26, proximate or on the energy storage device 510, or any other conceivable location that may require sensing. Each sensor 320 is configured to detect operational data 380 and transmit the operational data 380. Operational data 380 may include temperature, pressure, speed, operational parameters of the component that the sensor 320 is attached to, operational inputs from an operator, humidity, voltage, current, charge level, flow, solar radiation, VOC levels, refrigerant or gas leaks, vibration, door opening status, occupancy/cargo load levels, or any other similar parameter known to one of skill in the art. Some of the sensors 320 may be located in the vehicle 102 and may be in local communication with the controller 600.

The controller 600 is configured to communicate with the computer application 850 and the cloud-based controller 740. The controller 600 may be configured to communicate with the computer application 850 through the cloud-based controller 740. The controller 600 includes a communication device 636 to enable this communication. The communication device 636 may be capable of wireless communication including but not limited to Wi-Fi, Bluetooth, Zigbee, Sub-GHz RF Channel, cellular, satellite, or any other wireless signal known to one of skill in the art. The communication device 636 may be configured to communicate with the cloud-based controller 740 through the internet 306 using the communication device 636. The communication device 636 may be connected to the internet 306 through, cellular data connections, a satellite data connection, a Wi-Fi router or a building management system at a terminal or delivery stop.

The transport refrigeration unit 22 may include the location determination device 638. The location determination device 638 may be located in the controller 600, a sensor 320, or any other component of the transport refrigeration unit 22. Alternatively, the location determination device 638 may be a separate standalone component in communication with the controller 600.

The location determination device 638 that may be configured to determine location data 385 of the transport refrigeration unit 22 using cellular signal triangulation, a global position system (GPS), or any location termination method known to one of skill in the art. The location data 385 may include a longitude and latitude location, and an altitude. Advantageously, the location data 385 may be useful to determine where the transport refrigeration unit 22 is located in its present route, which may help determine where it is going and how best to control the transport refrigeration unit 22, as discussed further herein.

The cloud-based controller 740 may be a remote computer server that includes a processor 342 and an associated memory 344 comprising computer-executable instructions (i.e., computer program product) that, when executed by the processor 342, cause the processor 342 to perform various operations. The processor 342 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 344 may be but is not limited to a random access memory (RAM), read only memory (ROM), or other electronic, optical, magnetic or any other computer readable medium.

The cloud-based controller 740 also includes a communication device 346. The communication device 346 may be capable of communication with the internet 306. The communication device 346 may be configured to communicate with the computing device 800 through the internet 306. The communication device 346 may be a software module that handles communications to and from the computer application 850 or to and from the controller 600.

The computing device 800 may belong to or be in possession of an individual 404. The individual 404 may be a driver of the vehicle 102, a mechanic or technician maintaining the transport refrigeration unit 22, a worker loading or unloading the refrigerated cargo space 119, a manager responsible for monitoring the transport refrigeration unit 22, or any other individual that may be responsible for the transport refrigeration unit 22.

The computing device 800 may be a desktop computer, a stationary device (e.g., control panel), a laptop computer, or a mobile computing device that is typically carried by a person, such as, for example a phone, a smart phone, smart glasses, a PDA, a smart watch, a tablet, a laptop, a fixed computing module on the refrigeration unit 22 or in the vehicle 102, or any other mobile computing device known to one of skill in the art.

The computing device 800 includes a controller 810 configured to control operations of the computing device 800. The controller 810 may be an electronic controller including a processor 830 and an associated memory 820 comprising computer-executable instructions (i.e., computer program product) that, when executed by the processor 830, cause the processor 830 to perform various operations. The processor 830 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 820 may be but is not limited to a random access memory (RAM), read only memory (ROM), or other electronic, optical, magnetic or any other computer readable medium.

It is understood that the computer application 850 may be a mobile application installed on the computing device 800. The computer application 850 may be accessible from computing device 800, such as, for example, a software-as-as service or a website. The computer application 850 may be in communication with the cloud-based controller 740 via the internet 306.

The computing device 800 includes a communication device 840 configured to communicate with the internet 306 through one or more wireless signals. The one or more wireless signals may include Wi-Fi, Bluetooth, Zigbee, Sub-GHz RF Channel, cellular, satellite, or any other wireless signal known to one of skill in the art. Alternatively, the computing device 800 may be connected to the internet 306 through a hardwired connection. The computing device 800 is configured to communicate with the cloud-based controller 740 through the internet 306.

The computing device 800 may include a display device 880, such as for example a computer display, an LCD display, an LED display, an OLED display, a touchscreen of a smart phone, tablet, or any other similar display device known to one of the skill in the art. The individual 404 operating the computing device 800 is able to view the computer application 850 through the display device 880. If the computing device 800 is a pair of smart glasses, then the display device 880 may be a transparent lens of the pair of smart glasses.

The computing device 800 includes an input device 870 configured to receive a manual input from a user (e.g., human being) of computing device 800. The input device 870 may be a keyboard, a touch screen, a joystick, a knob, a touchpad, one or more physical buttons, a microphone configured to receive a voice command, a camera or sensor configured to receive a gesture command, an inertial measurement unit configured to detect a shake of the computing device 800, or any similar input device known to one of skill in the art. The user operating the computing device 800 is able to enter data into the computer application 850 through the input device 870. The input device 870 allows the user operating the computing device 800 to data into the computer application 850 via a manual input to input device 870. For example, the user may respond to a prompt on the display device 880 by entering a manual input via the input device 870. In one example, the manual input may be a touch on the touchscreen. In an embodiment, the display device 880 and the input device 870 may be combined into a single device, such as, for example, a touchscreen on a smart phone.

The computing device 800 device may also include a feedback device 860. The feedback device 860 may activate in response to a manual input via the input device 870. The feedback device 860 may be a haptic feedback vibration device and/or a speaker emitting a sound. The feedback device 860 may activate to confirm that the manual input entered via the input device 870 was received via the computer application 850. For example, the feedback device 860 may activate by emitting an audible sound or vibrate the computing device 800 to confirm that the manual input entered via the input device 870 was received via the computer application 850.

The computing device 800 may also include a location determination device 890 that may be configured to determine a location of the computing device 800 using cellular signal triangulation, GPS, or any location termination method known to one of skill in the art.

An analytics module 348 may be stored remotely on the memory 344 of the cloud-based controller 740 and/or locally on the memory 634 of the controller 600. In another embodiment, the analytics module 348 may be distributed amongst multiple cloud-based controllers (rather than the single cloud-based controller 740 that is illustrated in FIG. 2) and/or the controller 600.

The analytics module 348 may be a software algorithm capable of performing artificial intelligence and/or machining learning functions to analyze the location data 385, the operational data 380 from the transport refrigeration unit 22, and/or external data 384 from the internet 306 to determine recommended adjustment command 382.

As aforementioned the operational data 380 may be data relating to the operation and/or performance of the transport refrigeration unit 22 and/or power supply system 300. The operational data 380 may include an operating temperature, an operating pressure, and an operating speed of any component of the transport refrigeration unit 22 or the power supply system 300. Specific examples of operational data 380 may include, a temperature of the perishable goods 118, a temperature of return air 134 flowing through the return air intake 136, a temperature of conditioned air 138 flowing through the refrigeration unit outlet 140, a temperature of the refrigerant heat absorption heat exchanger 38, a temperature the refrigerant heat rejection heat exchanger 34, a pressure of the refrigerant compression device 32, a speed of the refrigerant compression device 32, a speed of the electric motor 26, a temperature of the electric motor 26, a state of charge of the energy storage device 510, a temperature of the energy storage device 510, or any other conceivable data parameter.

The external data 384 may be obtained from the internet 306 and/or other remote databases. The external data 384 may include, but is not limited to, delivery schedules, predicted delays due to traffic or weather, predicted weather, predicted weather that may affect anticipated solar gain, temperature, or humidity conditions, en route changes due to cancellations, typical operational patterns (e.g., breaks, refueling, recharging), locations of recharging stations on a present route (and their status - open/closed pricing), locations of fuel stations on a present route (and their status - open/closed pricing) or recommended revised routing.

The analytics module 348 may include prior route location data 352 and prior route operational data 354. The prior route location data 352 includes location data 385 of prior routes taken by the transport refrigeration unit 22 and/or other transport refrigeration unit within fleet. The prior route location data 352 may include location data 385 at selected time intervals (e.g., every second) so that a precise route may be tracked and recorded. The prior route operational data 354 may include operational data 380 recorder along each of the prior routes in the prior route location data 352. The prior route operational data 354 may also relate to the condition of a digital twin, which may indicate problems with the vehicle 102, the refrigeration system 200, or the status of the perishable goods 118 (e.g., it may predict that the thermal conditions maintained have caused, or will cause the condition of the cargo (118) to degrade). The prior route location data 352 need not by entered by a user 404 but rather the prior route location date 352 may be location data 385 that was tracked during a previous route.

The analytics module 348 is configured to analyze location data 385 being currently tracked by the location determination device 638 and compare the location data 385 to the prior route location data 352 to determine a current route that the transport refrigeration unit 22 is currently travelling on. For example, a transport refrigeration unit 22 may start at a starting location which is the same starting location of one-hundred prior routes in the prior route location data 352, but as the transportation moves along on its route the analytics module 348 can start narrowing down what route the transport refrigeration unit 22 is on by how similar the location data 385 is to prior route location data 352. Once a current route for the transport refrigeration unit 22 is determined then the analytics module 348 can generate recommended adjustment commands 382 to optimize performance of the transport refrigeration unit 22 on the current route based on at least the prior route operational data 354. The analytics module 348 may also take into account external data 384 and/or operational data 380. The recommended adjustment command 382 is configured to adjust a performance of the transport refrigeration unit 22 and/or the power supply system 300.

In one example, the analytics module 348 generates a recommended adjustment command 382 that increases cooling to the transport container 106 in advance of transport refrigeration system 200 reaching hotter weather, experiencing lengthy traffic, or stopping where the doors 117 may be opened for extended period of time based on the prior route operational data 354. Advantageously, this recommended adjustment command 382 may help alleviate strain on the transport refrigeration unit 22, or protect/improve the condition of the goods (118), when it experiences these conditions. In another example, the analytics module 348 generates a recommended adjustment command 382 that commands the thermal storage system 516 to generate ice to keep the transport container 106 cool in advance of transport refrigeration system 200 reaching hotter weather, experiencing lengthy traffic, or stopping where the doors 117 may be opened for extended period of time. Advantageously, this recommended adjustment command 382 may help alleviate strain on the transport refrigeration unit 22 when it experiences these conditions.

In another example, the analytics module 348 generates a recommended adjustment command 382 that increases electricity use by the transport refrigeration unit 22 or the thermal storage system 516 to increase cooling to the transport container 106 in order to drain the energy storage device 510 in advance of the transport refrigeration system 200 approaching a hill where the generator 388 may be able to generate energy from the hub or axle due to the downhill descent, a braking area where the generator 388 may be able to generate energy from the hub or axle due to the slowing of the vehicle 102, or a charging station 386 where the energy storage device 510 may be recharged based on the prior route operational data 354. Advantageously, this recommended adjustment command 382 may help dump energy into cooling when other energy sources will be immediately available to recharge the energy storage device 510, thus allowing the overall system to operate for longer periods of time.

The analytics module 348 may also be configured to temporarily reduce the nominal cargo temperature setpoint in times of limited power/capacity. At a minimum the analytics module 348 may also be configured to operate the transport refrigeration unit 22 at the lower limits of acceptable temperature (analogous to setting your home thermostat a little higher or lower than preferred to save energy). In severe limiting conditions it may be advisable to violate the desired temperature conditions.

Advantageously, the prior route operational data 354 provides a benchmark that will drive decision making (either for improvement or for risk mitigation). For example, the prior route operational data 354 may provide the energy profile for a benchmark for specific trip. Operational data 380, such as, for example, a number times the transportation refrigeration unit 22 previously went into to defrost during the prior route can be used to save energy (increase defrost interval) or increase efficiency (decrease defrost interval).

Advantageously, knowing an energy profile from the prior route operational data 354 may be used to calculate risk based on current conditions (e.g., external data 384 and operational date 380). For example, energy may be being used at a greater rate this trip compared to previous trip therefore a change will need to be made preemptively to mitigate risk to transportation refrigeration unit 22 and/or perishable goods 118.

The recommended adjustment command 382 may be transmitted to the controller 600 and the controller 600 may automatically adjust operation of the transport refrigeration unit 22 and/or the power supply system 300 based on the recommended adjustment command 382. Alternatively, the controller 600 may relay the recommended adjustment command 382 to the power supply system 300 and the power supply system 300 may automatically adjust operation of the power supply system 300 based on the recommended adjustment command 382. Additionally, analytics module 348 may be able to track the improvements of those recommended adjustment commands 382 and can re-act accordingly

Alternatively, the recommended adjustment command 382 may be transmitted to the computing device 800 and the individual 404 may manually adjust operation of the transport refrigeration unit 22 and/or the power supply system 300 based on the recommended adjustment command 382.

The analytics module 348 may continuously learn from each route taken and update the underlying algorithms to provide for better performance and optimization of the transport refrigeration unit 22 and the power supply system 300 on future routes. This learned data from each route may be shared across multiple different transport refrigeration units 22 in a fleet of transport refrigeration units 22 to better optimize the data learned from each route, which would lead to better performance of each transport refrigeration unit 22 in the fleet.

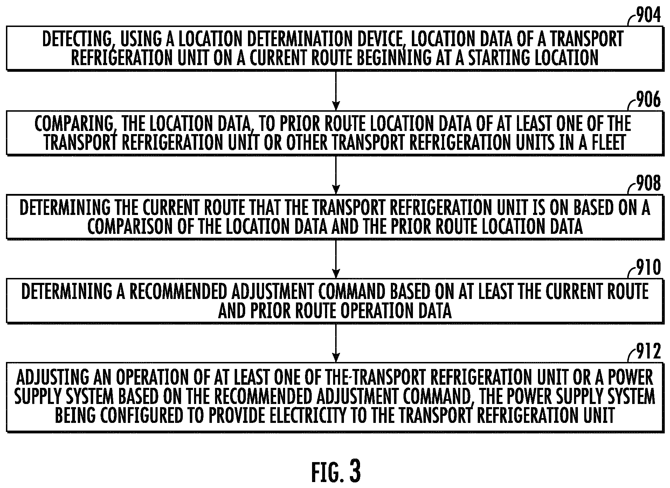

Referring now to FIG. 3, with continued reference to FIGS. 1 and 2. A flow process of a method 900 of operating a transport refrigeration system 20 is illustrated, according to an embodiment of the present invention. In an embodiment, the method 900 may be performed by the analytics module 348.

At block 904, a location determination device 638 detects location data 385 of a transport refrigeration unit 22 on a current route beginning at a starting location. The location data 385 may be tracked in real-time in multiple locations at a selected time interval between each of the multiple locations as the transport refrigeration unit 22 moves along the current route away from the starting location.

At block 906, the location data 385 is compared to prior route location data 352 of at least one of the transport refrigeration unit 22 or other transport refrigeration unit in a fleet. The location data 385 may be compared to the prior route location data 352 in real-time in each of the multiple locations as the transport refrigeration unit 22 moves along the current route away from the starting location

At block 908, the current route that the transport refrigeration unit 22 is on is determined based on a comparisons of the location data 385 and the prior route location data 352.

At block 910, a recommended adjustment command 382 is determined based on at least the current route and prior route operational data 354. Machine learning and/or artificial intelligence may be applied in real-time to determine recommended adjustment commands 382 that optimize operation of the transport refrigeration system 200.

At block 912, an operation of at least one of the transport refrigeration unit 22 or a power supply system 300 is adjusted based on the recommended adjustment command 382, the power supply system 300 being configured to provide electricity to the transport refrigeration unit 22.

The operation may be automatically adjusted based on the recommended adjustment command 382 by at least one of a controller 600 of the transport refrigeration unit 22 or a power management module 310 of the power supply system 300.

Alternatively, the recommended adjustment command 382 may be transmitted to a computing device of an individual 404 and the individual 404 can adjust the operation based on the recommended adjustment command 382.

In block 912, the transport refrigeration unit 22 may be configured to increase or decrease cooling or heating based on the recommended adjustment command 382. In block 912, the power management module 310 may be configured to increase or decrease power draw from the power supply system 300 based on the recommended adjustment command 382. For example, some adjustments to save energy may include, but are not limited to, increasing the set point temperature of the transport refrigeration unit 22, change from continuous operation of the transport refrigeration unit 22 to start/stop, reduce variable drive speed of the electric motor 26 if the electric motor 26 is a variable drive unit, and/or put the transport refrigeration unit 22 into a fan cycling mode.

While the above description has described the flow process of FIG. 3, in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made without departing from the scope of the present invention as defined in the appended claims. In addition, many modifications may be made to adapt a particular situation or material. Therefore, it is intended that the present invention not be limited to the particular embodiment disclosed as the best mode contemplated for carrying out this present invention, but that the present invention will include all embodiments falling within the scope of the claims.

## Claims

1. A method of operating a transport refrigeration system (200), the method comprising:
detecting (904), using a location determination device (638), location data (385) of a transport refrigeration unit (22) on a current route beginning at a starting location;
comparing (906) the detected location data (385) to prior route location data (352) of at least one of the transport refrigeration unit (22) or other transport refrigeration units in a fleet;
determining (908) the current route that the transport refrigeration unit (22) is on based on the comparison of the detected location data (385) and the prior route location data (352);
determining (910) a recommended adjustment command (382) based on at least the current route and prior route operation data (354); and
adjusting (912) an operation of at least one of the transport refrigeration unit (22) or a power supply system (300) based on the recommended adjustment command (382), the power supply system (300) being configured to provide electricity to the transport refrigeration unit (22);
wherein the location data (385) is tracked in real-time in multiple locations at a selected time interval between each of the multiple locations as the transport refrigeration unit (22) moves along the current route away from the starting location; and
wherein the detected location data (385) is compared to the prior route location data (352) in real-time in each of the multiple locations as the transport refrigeration unit (22) moves along the current route away from the starting location.

2. The method of claim 1, wherein the operation is automatically adjusted based on the recommended adjustment command (382) by at least one of a controller (600) of the transport refrigeration unit (22) or a power management module (310) of the power supply system (300).

3. The method of claim 1, or 2, further comprising:
transmitting the recommended adjustment command (382) to a computing device of an individual (404), wherein the individual (404) can accept a recommended adjustment via the computing device, the operation adjusted in response to the recommended adjustment being accepted.

4. The method of any preceding claim, further comprising
increasing or decreasing cooling provided by the transport refrigeration unit (22) based on the recommended adjustment command (382).

5. The method of any preceding claim, further comprising
increasing or decreasing heating provided by the transport refrigeration unit (22) based on the recommended adjustment command (382).

6. The method of any preceding claim, further comprising
increasing or decreasing power draw from the power supply system (300) based on the recommended adjustment command (382).

7. A transport refrigeration system comprising:
a transport refrigeration unit (22) configured to provide conditioned air to a refrigerated cargo space (119) of a transport container (106);
a power supply system (300) configured to provide electricity to the transport refrigeration unit (22);
a location determination device (638) configured to detect location data (382) of the transport refrigeration unit (22) on a current route beginning at a starting location; and
an analytics module (348) configured to compare the detected location data (385) to prior route location data (352) of at least one of the transport refrigeration unit (22) or other transport refrigeration units in a fleet, the analytics module (348) being configured to determine the current route that the transport refrigeration unit (22) is on based on a comparison of the detected location data (385) and the prior route location data (352) and determine a recommended adjustment command (382) based on at least the current route and prior route operation data (354), and
wherein an operation of at least one of the transport refrigeration unit (22) or the power supply system (300) is adjusted based on the recommended adjustment command (382)
wherein the detected location data (385) is tracked in real-time in multiple locations at a selected time interval between each of the multiple locations as the transport refrigeration unit (22) moves along the current route away from the starting location; and
wherein the detected location data (385) is compared to the prior route location data (352) in real-time in each of the multiple locations as the transport refrigeration unit (22) moves along the current route away from the starting location.

8. The transport refrigeration system of claim 7, wherein the operation is automatically adjusted based on the recommended adjustment command (382) by at least one of a controller (600) of the transport refrigeration unit (22) or a power management module (310) of the power supply system (300).

9. The transport refrigeration system of claim 7 or 8, wherein the recommended adjustment command (382) is transmitted to a computing device of an individual (404), wherein the individual (404) can accept a recommended adjustment via the computing device, the operation adjusted in response to the recommended adjustment being accepted.

10. The transport refrigeration system of any of claims 7 to 9, wherein the transport refrigeration unit (22) is configured to increase cooling or decrease based on the recommended adjustment command (382).

11. The transport refrigeration system of any of claims 7 to 10, wherein the transport refrigeration unit (22) is configured to increase heating or decrease based on the recommended adjustment command (382).

12. The transport refrigeration system of any of claims 7 to 11, wherein a power management module (310) is configured to increase power draw or decrease power draw from the power supply system (300) based on the recommended adjustment command (382).

13. A computer program product tangibly embodied on a non-transitory computer readable medium, the computer program product including instructions that, when executed by a processor, cause the processor to perform operations comprising:
detecting (904, using a location determination device, location data (385) of a transport refrigeration unit (22) on a current route beginning at a starting location;
comparing (906), the detected location data (385), to prior route location data (352) of at least one of the transport refrigeration unit (22) or other transport refrigeration units in a fleet;
determining (908) the current route that the transport refrigeration unit (22) is on based on a comparison of the detected location data (385) and the prior route location data (352);
determining (910) a recommended adjustment command (382) based on at least the current route and prior route operation data (354); and
adjusting (912) an operation of at least one of the transport refrigeration unit (22) or a power supply system (300) based on the recommended adjustment command (382), the power supply system (300) being configured to provide electricity to the transport refrigeration unit (22);
wherein the location data (385) is tracked in real-time in multiple locations at a selected time interval between each of the multiple locations as the transport refrigeration unit (22) moves along the current route away from the starting location; and
wherein the detected location data (385) is compared to the prior route location data (352) in real-time in each of the multiple locations as the transport refrigeration unit (22) moves along the current route away from the starting location.

## Patentansprüche

1. Verfahren zum Betreiben eines Transportkühlsystems (200), wobei das Verfahren Folgendes umfasst:
Erfassen (904) von Standortdaten (385) einer Transportkühleinheit (22) auf einer aktuellen, an einem Startstandort beginnenden Route unter Verwendung einer Standortbestimmungsvorrichtung (638);
Vergleichen (906) der erfassten Standortdaten (385) mit vorherigen Routenstandortdaten (352) von mindestens einer der Transportkühleinheit (22) oder anderen Transportkühleinheiten in einer Flotte;
Bestimmen (908) der aktuellen Route, auf der sich die Transportkühleinheit (22) befindet, basierend auf dem Vergleich der erfassten Standortdaten (385) und der vorherigen Routenstandortdaten (352);
Bestimmen (910) eines Befehls für eine empfohlene Anpassung (382) basierend auf mindestens den aktuellen Routen- und vorherigen Routenbetriebsdaten (354); und
Anpassen (912) eines Betriebs von mindestens einem von der Transportkühleinheit (22) oder einem Leistungsversorgungssystem (300) basierend auf dem Befehl für eine empfohlene Anpassung (382), wobei das Leistungsversorgungssystem (300) zum Bereitstellen von Strom an der Transportkühleinheit (22) konfiguriert ist;
wobei die Standortdaten (385) in Echtzeit an mehreren Standorten in einem ausgewählten Zeitintervall zwischen jedem der mehreren Standorte verfolgt werden, während sich die Transportkühleinheit (22) entlang der aktuellen Route von dem Startstandort weg bewegt; und
wobei die erfassten Standortdaten (385) mit den vorherigen Routenstandortdaten (352) in Echtzeit an jedem der mehreren Standorte verglichen werden, während sich die Transportkühleinheit (22) entlang der aktuellen Route von dem Startstandort weg bewegt.

2. Verfahren nach Anspruch 1, wobei der Betrieb automatisch basierend auf dem Befehl für eine empfohlene Anpassung (382) durch mindestens eines von einer Steuerung (600) der Transportkühleinheit (22) oder einem Leistungsmanagementmodul (310) des Leistungsversorgungssystems (300) angepasst wird.

3. Verfahren nach Anspruch 1 oder 2, ferner umfassend:
Übertragen des Befehls für eine empfohlene Anpassung (382) an eine Rechenvorrichtung einer Person (404), wobei die Person (404) eine empfohlene Anpassung über die Recheneinrichtung akzeptieren kann, wobei der als Reaktion auf die empfohlene Anpassung angepasste Betrieb akzeptiert wird.

4. Verfahren nach einem der vorhergehenden Ansprüche, ferner umfassend
Erhöhen oder Verringern des von der Transportkühleinheit (22) bereitgestellten Kühlens basierend auf dem Befehl für eine empfohlene Anpassung (382).

5. Verfahren nach einem der vorhergehenden Ansprüche, ferner umfassend
Erhöhen oder Verringern des von der Transportkühleinheit (22) bereitgestellten Erwärmens basierend auf dem Befehl für eine empfohlene Anpassung (382).

6. Verfahren nach einem der vorhergehenden Ansprüche, ferner umfassend
Erhöhen oder Verringern der Leistungsaufnahme aus dem Leistungsversorgungssystem (300) basierend auf dem Befehl für eine empfohlene Anpassung (382).

7. Transportkühlsystem, umfassend:
eine Transportkühleinheit (22), die zum Bereitstellen von klimatisierter Luft für einen gekühlten Laderaum (119) eines Transportcontainers (106) konfiguriert ist;
ein Leistungsversorgungssystem (300), das zum Bereitstellen von Strom an der Transportkühleinheit (22) konfiguriert ist;
eine Standorterfassungsvorrichtung (638), die zum Erfassen von Standortdaten (382) der Transportkühleinheit (22) auf einer aktuellen, an einem Startstandort beginnenden Route konfiguriert ist; und
ein Analysemodul (348), das zum Vergleichen der erfassten Standortdaten (385) mit vorherigen Routenstandortdaten (352) von mindestens einer der Transportkühleinheit (22) oder anderen Transportkühleinheiten in einer Flotte zu konfiguriert ist, wobei das Analysemodul (348) zum Bestimmen der aktuellen Route, auf der sich die Transportkühleinheit (22) befindet, basierend auf einem Vergleich der erfassten Standortdaten (385) und der vorherigen Routenstandortdaten (352) und zum Bestimmen eines Befehls für eine empfohlene Anpassung (382) basierend auf mindestens den aktuellen Routen- und vorherigen Routenbetriebsdaten (354) konfiguriert ist und
wobei ein Betrieb von mindestens einem von der Transportkühleinheit (22) oder dem Leistungsversorgungssystem (300) basierend auf dem Befehl für eine empfohlene Anpassung (382) angepasst wird,
wobei die erfassten Standortdaten (385) in Echtzeit an mehreren Standorten in einem ausgewählten Zeitintervall zwischen jedem der mehreren Standorte verfolgt werden, während sich die Transportkühleinheit (22) entlang der aktuellen Route von dem Startstandort weg bewegt; und
wobei die erfassten Standortdaten (385) mit den vorherigen Routenstandortdaten (352) in Echtzeit an jedem der mehreren Standorte verglichen werden, während sich die Transportkühleinheit (22) entlang der aktuellen Route von dem Startstandort weg bewegt.

8. Transportkühlsystem nach Anspruch 7, wobei der Betrieb automatisch basierend auf dem Befehl für eine empfohlene Anpassung (382) durch mindestens eines von einer Steuerung (600) der Transportkühleinheit (22) oder einem Leistungsmanagementmodul (310) des Leistungsversorgungssystems (300) angepasst wird.

9. Transportkühlsystem nach Anspruch 7 oder 8, wobei der Befehl für eine empfohlene Anpassung (382) an eine Rechenvorrichtung einer Person (404) übertragen wird, wobei die Person (404) eine empfohlene Anpassung über die Recheneinrichtung akzeptieren kann, wobei der als Reaktion auf die empfohlene Anpassung angepasste Betrieb akzeptiert wird.

10. Transportkühlsystem nach einem der Ansprüche 7 bis 9, wobei die Transportkühleinheit (22) zum Erhöhen oder Verringern von Kühlen basierend auf dem Befehl für eine empfohlene Anpassung (382) konfiguriert ist.

11. Transportkühlsystem nach einem der Ansprüche 7 bis 10, wobei die Transportkühleinheit (22) zum Erhöhen oder Verringern von Erwärmen basierend auf dem Befehl für eine empfohlene Anpassung (382) konfiguriert ist.

12. Transportkühlsystem nach einem der Ansprüche 7 bis 11, wobei ein Leistungsmanagementmodul (310) zum Erhöhen der Leistungsaufnahme oder Verringern der Leistungsaufnahme aus dem Leistungsversorgungssystem (300) basierend auf dem Befehl für eine empfohlene Anpassung (382) konfiguriert ist.

13. Computerprogrammprodukt, das physisch auf einem computerlesbaren Medium verkörpert ist, wobei das Computerprogrammprodukt Anweisungen beinhaltet, die bei Ausführung durch einen Prozessor den Prozessor zum Durchführen von Vorgängen veranlassen, die Folgendes umfassen:
Erfassen (904 von Standortdaten (385) einer Transportkühleinheit (22) auf einer aktuellen, an einem Startstandort beginnenden Route unter Verwendung einer Standortbestimmungsvorrichtung;
Vergleichen (906) der erfassten Standortdaten (385) mit vorherigen Routenstandortdaten (352) von mindestens einer der Transportkühleinheit (22) oder anderen Transportkühleinheiten in einer Flotte;
Bestimmen (908) der aktuellen Route, auf der sich die Transportkühleinheit (22) befindet, basierend auf einem Vergleich der erfassten Standortdaten (385) und der vorherigen Routenstandortdaten (352);
Bestimmen (910) eines Befehls für eine empfohlene Anpassung (382) basierend auf mindestens den aktuellen Routen- und vorherigen Routenbetriebsdaten (354); und
Anpassen (912) eines Betriebs von mindestens eines von der Transportkühleinheit (22) oder einem Leistungsversorgungssystem (300) basierend auf dem Befehl für eine empfohlene Anpassung (382), wobei das Leistungsversorgungssystem (300) zum Bereitstellen von Strom an der Transportkühleinheit (22) konfiguriert ist;
wobei die Standortdaten (385) in Echtzeit an mehreren Standorten in einem ausgewählten Zeitintervall zwischen jedem der mehreren Standorte verfolgt werden, während sich die Transportkühleinheit (22) entlang der aktuellen Route von dem Startstandort weg bewegt; und
wobei die erfassten Standortdaten (385) mit den vorherigen Routenstandortdaten (352) in Echtzeit an jedem der mehreren Standorte verglichen werden, während sich die Transportkühleinheit (22) entlang der aktuellen Route von dem Startstandort weg bewegt.

## Revendications

1. Procédé de fonctionnement d'un système de réfrigération de transport (200), le procédé comprenant :
la détection (904), à l'aide d'un dispositif de détermination d'emplacement (638), des données d'emplacement (385) d'une unité de réfrigération de transport (22) sur un itinéraire actuel commençant à un emplacement de départ ;
la comparaison (906) des données de localisation détectées (385) aux données de localisation d'itinéraire précédentes (352) d'au moins l'une de l'unité de réfrigération de transport (22) ou d'autres unités de réfrigération de transport dans une flotte ;
la détermination (908) de l'itinéraire actuel sur laquelle se trouve l'unité de réfrigération de transport (22) sur la base de la comparaison des données de localisation détectées (385) et des données de localisation de l'itinéraire précédent (352) ;
la détermination (910) d'une commande d'ajustement recommandée (382) sur la base au moins des données d'exploitation de l'itinéraire actuel et de l'itinéraire précédent (354) ; et
l'ajustement (912) d'un fonctionnement d'au moins l'une de l'unité de réfrigération de transport (22) ou d'un système d'alimentation électrique (300) sur la base de la commande d'ajustement recommandée (382), le système d'alimentation électrique (300) étant configuré pour fournir de l'électricité à l'unité de réfrigération de transport (22) ;
dans lequel les données de localisation (385) sont suivies en temps réel dans de multiples emplacements à un intervalle de temps sélectionné entre chacun des multiples emplacements lorsque l'unité de réfrigération de transport (22) se déplace le long de l'itinéraire actuel en s'éloignant de l'emplacement de départ ; et
dans lequel les données de localisation détectées (385) sont comparées aux données de localisation d'itinéraire précédentes (352) en temps réel dans chacun des multiples emplacements à mesure que l'unité de réfrigération de transport (22) se déplace le long de l'itinéraire actuel en s'éloignant de l'emplacement de départ.

2. Procédé selon la revendication 1, dans lequel le fonctionnement est automatiquement ajusté sur la base de la commande d'ajustement recommandée (382) par au moins l'un d'un dispositif de commande (600) de l'unité de réfrigération de transport (22) ou d'un module de gestion d'énergie (310) du système d'alimentation électrique (300).

3. Procédé selon la revendication 1 ou 2, comprenant également :
la transmission de la commande de réglage recommandée (382) à un dispositif informatique d'un individu (404), dans lequel l'individu (404) peut accepter un réglage recommandé via le dispositif informatique, l'opération étant ajustée en réponse au réglage recommandé accepté.

4. Procédé selon une quelconque revendication précédente, comprenant également
l'augmentation ou la diminution du refroidissement fourni par l'unité de réfrigération de transport (22) en fonction de la commande de réglage recommandée (382).

5. Procédé selon une quelconque revendication précédente, comprenant également
l'augmentation ou diminution du chauffage fourni par l'unité de réfrigération de transport (22) en fonction de la commande de réglage recommandée (382).

6. Procédé selon une quelconque revendication précédente, comprenant également
l'augmentation ou la diminution de la consommation d'énergie du système d'alimentation électrique (300) en fonction de la commande de réglage recommandée (382).

7. Système de réfrigération de transport comprenant :
une unité de réfrigération de transport (22) conçue pour fournir de l'air conditionné à un espace de chargement réfrigéré (119) d'un conteneur de transport (106) ;
un système d'alimentation électrique (300) configuré pour fournir de l'électricité à l'unité de réfrigération de transport (22) ;
un dispositif de détermination d'emplacement (638) configuré pour détecter des données d'emplacement (382) de l'unité de réfrigération de transport (22) sur un itinéraire actuel commençant à un emplacement de départ ; et
un module d'analyse (348) configuré pour comparer les données de localisation détectées (385) aux données de localisation d'itinéraire antérieur (352) d'au moins l'une de l'unité de réfrigération de transport (22) ou d'autres unités de réfrigération de transport d'une flotte, le module d'analyse (348) étant configuré pour déterminer l'itinéraire actuel de l'unité de réfrigération de transport (22) sur la base d'une comparaison des données de localisation détectées (385) et des données de localisation d'itinéraire précédent (352) et déterminer une commande d'ajustement recommandée (382) sur la base au moins des données d'itinéraire actuel et d'exploitation d'itinéraire précédent (354), et
dans lequel le fonctionnement d'au moins l'une de l'unité de réfrigération de transport (22) ou du système d'alimentation électrique (300) est ajusté en fonction de la commande d'ajustement recommandée (382)
dans lequel les données de localisation détectée (385) sont suivies en temps réel dans de multiples emplacements à un intervalle de temps sélectionné entre chacun des multiples emplacements lorsque l'unité de réfrigération de transport (22) se déplace le long de l'itinéraire actuel en s'éloignant de l'emplacement de départ ; et
dans lequel les données de localisation détectées (385) sont comparées aux données de localisation d'itinéraire précédentes (352) en temps réel dans chacun des multiples emplacements à mesure que l'unité de réfrigération de transport (22) se déplace le long de l'itinéraire actuel en s'éloignant de l'emplacement de départ.

8. Système de réfrigération de transport selon la revendication 7, dans lequel le fonctionnement est automatiquement ajusté sur la base de la commande d'ajustement recommandée (382) par au moins l'un d'un dispositif de commande (600) de l'unité de réfrigération de transport (22) ou d'un module de gestion d'énergie (310) du système d'alimentation électrique (300).

9. Le système de réfrigération de transport selon la revendication 7 ou 8, dans lequel la commande de réglage recommandée (382) est transmise à un dispositif informatique d'un individu (404), dans lequel l'individu (404) peut accepter un réglage recommandé via le dispositif informatique, l'opération étant ajustée en réponse au réglage recommandé accepté.

10. Système de réfrigération de transport selon l'une quelconque des revendications 7 à 9, dans lequel l'unité de réfrigération de transport (22) est configurée pour augmenter ou diminuer le refroidissement en fonction de la commande de réglage recommandée (382).

11. Système de réfrigération de transport selon l'une quelconque des revendications 7 à 10, dans lequel l'unité de réfrigération de transport (22) est configurée pour augmenter ou diminuer le réchauffement en fonction de la commande de réglage recommandée (382).

12. Système de réfrigération de transport selon l'une quelconque des revendications 7 à 11, dans lequel un module de gestion d'énergie (310) est configuré pour augmenter la consommation d'énergie ou diminuer la consommation d'énergie du système d'alimentation électrique (300) en fonction de la commande de réglage recommandée (382).

13. Produit de programme informatique réalisé de manière tangible sur un support lisible par ordinateur non transitoire, le produit de programme informatique comportant des instructions qui, lorsqu'elles sont exécutées par un processeur, amènent le processeur à réaliser des opérations comprenant :
la détection (904), à l'aide d'un dispositif de détermination d'emplacement, des données d'emplacement (385) d'une unité de réfrigération de transport (22) sur un itinéraire actuel commençant à un emplacement de départ ;
la comparaison (906), des données de localisation détectées (385), aux données de localisation d'itinéraire précédentes (352) d'au moins l'une de l'unité de réfrigération de transport (22) ou d'autres unités de réfrigération de transport dans une flotte ;
la détermination (908) de l'itinéraire actuel sur laquelle se trouve l'unité de réfrigération de transport (22) sur la base d'une comparaison des données de localisation détectées (385) et des données de localisation de l'itinéraire précédent (352) ;
la détermination (910) d'une commande d'ajustement recommandée (382) sur la base au moins des données d'exploitation de l'itinéraire actuel et de l'itinéraire précédent (354) ; et
l'ajustement (912) d'un fonctionnement d'au moins l'une de l'unité de réfrigération de transport (22) ou d'un système d'alimentation électrique (300) sur la base de la commande d'ajustement recommandée (382), le système d'alimentation électrique (300) étant configuré pour fournir de l'électricité à l'unité de réfrigération de transport (22) ;
dans lequel les données de localisation (385) sont suivies en temps réel dans de multiples emplacements à un intervalle de temps sélectionné entre chacun des multiples emplacements lorsque l'unité de réfrigération de transport (22) se déplace le long de l'itinéraire actuel en s'éloignant de l'emplacement de départ ; et
dans lequel les données de localisation détectées (385) sont comparées aux données de localisation d'itinéraire précédentes (352) en temps réel dans chacun des multiples emplacements à mesure que l'unité de réfrigération de transport (22) se déplace le long de l'itinéraire actuel en s'éloignant de l'emplacement de départ.
